# FASCICULE DE BREVET EUROPEEN

(11) **EP 0 502 762 B1**
(45) Date de publication et mention de la délivrance du brevet: **10.08.1994**
(21) Numéro de dépôt: 92400498.9
(22) Date de dépôt: 26.02.1992
(51) Int. Cl.: A01B 15/14, A01B 3/42

(54) **Perfectionnement aux charrues munies d'un dispositif de réglage du déport et, éventuellement, du devers**
Pflug mit einer Vorrichtung zur Regelung der Neigung und des Seitengriffs
Plough having off-setting and width adjusting device

(30) Priorité: 27.02.1991 FR 9102517
(43) Date de publication de la demande: 09.09.1992
(73) Titulaire: CHARRUES NAUD, 49600 Andreze (FR)
(72) Inventeur: Naud, Bernard, F-49600 Andreze (FR)
(74) Mandataire: Le Brusque, Maurice

(56) Documents cités:
- EP-A- 0 196 882
- WO-A-90/01863
- FR-A- 2 583 950
- GB-A- 2 166 932

## Description

La présente invention concerne un perfectionnement aux charrues munies d'un dispositif de réglage du déport, permettant d'adapter la charrue aux différentes voies que l'on trouve sur les tracteurs.

On connaît, par le document EP-A-0196882, une charrue selon le préambule de la revendication 1, qui comporte des moyens permettant de déplacer le bâti parallèlement à lui-même pour réaliser le déport. Ces moyens sont constitués d'un parallélogramme dont l'un des angles est un point fictif constituant le centre d'un système de guidage en arc de cercle aménagé à l'extrémité avant du bâti, en liaison avec la tête support. Dans cette réalisation, la liaison bâti-tête est complexe ; elle comprend une glissière, un axe d'articulation pour le support de la glissière et, combinés à tout cela, des moyens de réglage de la position du bâti par rapport à la tête. Cet ensemble est particulièrement complexe et onéreux ; il est surtout fragile et ne peut que faiblement participer au maintien et supportage du bâti sur la tête.

La présente invention propose un perfectionnement à ce type de charrue par l'adoption de solutions constructives plus efficaces et nettement moins onéreuses.

L'invention propose également un système qui permet de modifier l'angle que fait le bâti avec l'axe longitudinal d'avancement, dans des proportions qui offrent selon le cas, en plus du réglage du dévers, la possibilité d'effectuer un réglage de la variation de largeur des corps et, éventuellement, un recentrage du bâti pour faciliter les opérations de retournement de la charrue lorsque celle-ci est réversible.

La même charrue offre ainsi une gamme d'exploitation très large selon l'équipement qui sera adapté. Cette charrue est en effet en mesure de satisfaire, selon son degré d'équipement, un grand éventail d'utilisateurs. Elle peut être exploitée en charrue simple munie d'un réglage commode de déport et, éventuellement, de dévers. Elle peut être exploitée en charrue à largeur variable. Lorsqu'elle a un nombre de corps important, elle peut être recentrable pour faciliter l'opération de retournement.

La charrue selon l'invention comprend : - une tête support centrée sur un axe longitudinal, - un bâti qui porte les corps de labour, relié par son extrémité à ladite tête par des moyens qui réalisent un mouvement à la fois en translation, de façon à déplacer le bâti (3) parallèlement à lui-même, et en rotation autour d'un pivot qui est vertical lorsque la charrue est en position de travail, - un bras support disposé entre la tête et le bâti, articulé sur ladite tête au moyen d'un axe situé à l'opposé dudit pivot par rapport audit axe longitudinal, et articulé sur le bâti au moyen d'un axe qui se situe, éloigné de la tête support, sur la longueur de ce dernier, lesquels moyens de mouvement en translation du bâti par rapport à la tête étant constitués d'une glissière en forme d'arc de cercle, le centre dudit arc correspondant à l'un des angles d'un parallélogramme dont les autres angles sont constitués par ledit pivot et les deux axes situés sur ledit bras support, le pivot en question est directement implanté sur la tête support et coopère directement avec l'extrémité du bâti, côté tête.

Toujours selon l'invention, le système de glissière en arc de cercle comprend une rainure en forme de lumière aménagée à l'extrémité du bâti, et guidée sur le pivot d'articulation solidaire de la tête, de façon à réaliser en même temps le mouvement en translation et en rotation de l'extrémité du bâti par rapport à la tête support.

Selon une autre disposition de l'invention, un vérin du type à vis, ou un vérin hydraulique selon le mode d'exploitation de la charrue, est interposé entre le bras et le bâti, à proximité de la tête support.

Les dimensions de la lumière du système de guidage sont telles qu'elles permettent de réaliser un déport de la charrue, adapté à la voie du tracteur utilisé.

Selon une autre disposition de l'invention, la charrue comporte des moyens qui permettent de déplacer l'axe situé à l'extrémité du bras, par rapport au bâti, de façon à modifier l'angle du bâti, pour effectuer selon les besoins, soit un réglage du dévers, soit une variation de la largeur de travail des corps, ou encore un recentrage du bâti lors de l'opération de retournement pour une charrue réversible.

Toujours selon l'invention, les moyens qui permettent de déplacer l'axe situé à l'extrémité du bras, par rapport au bâti, sont constitués d'une rainure aménagée sur ledit bâti, et, solidaire de ce dernier, d'un organe qui permet la manoeuvre dudit axe guidé dans la rainure.

Toujours selon l'invention, la rainure aménagée sur le bâti est une rainure rectiligne parallèle au bâti ou, pour conserver un véritable parallélogramme, une rainure en forme d'arc de cercle qui est centré sur l'axe fictif qui constitue l'un des quatre angles dudit parallélogramme.

Selon une autre disposition de l'invention, l'organe de manoeuvre de l'axe du bras par rapport au bâti, est constitué d'un vérin à vis et/ou d'un vérin hydraulique selon le mode d'utilisation de la charrue.

Toujours selon l'invention, et selon le mode d'utilisation de la charrue, les corps de labour sont articulés par rapport au bâti autour d'axes verticaux lorsque la charrue est en position normale de travail, de façon à permettre un réglage de la largeur de travail de ces corps ; lesquels corps peuvent être reliés entre eux par un système classique de tringle asservie.

L'invention sera encore détaillée à l'aide de la description suivante d'un mode de réalisation et des dessins annexés donnés à titre indicatif, et dans lesquels :
- la figure 1 est une vue de dessus schématisant la charrue selon l'invention ;
- la figure 2 est une coupe selon 2-2 montrant principalement le bras ;
- la figure 3 illustre la rainure aménagée sur le bâti en vue de régler l'angle du bâti par rapport à l'axe longitudinal de la charrue.

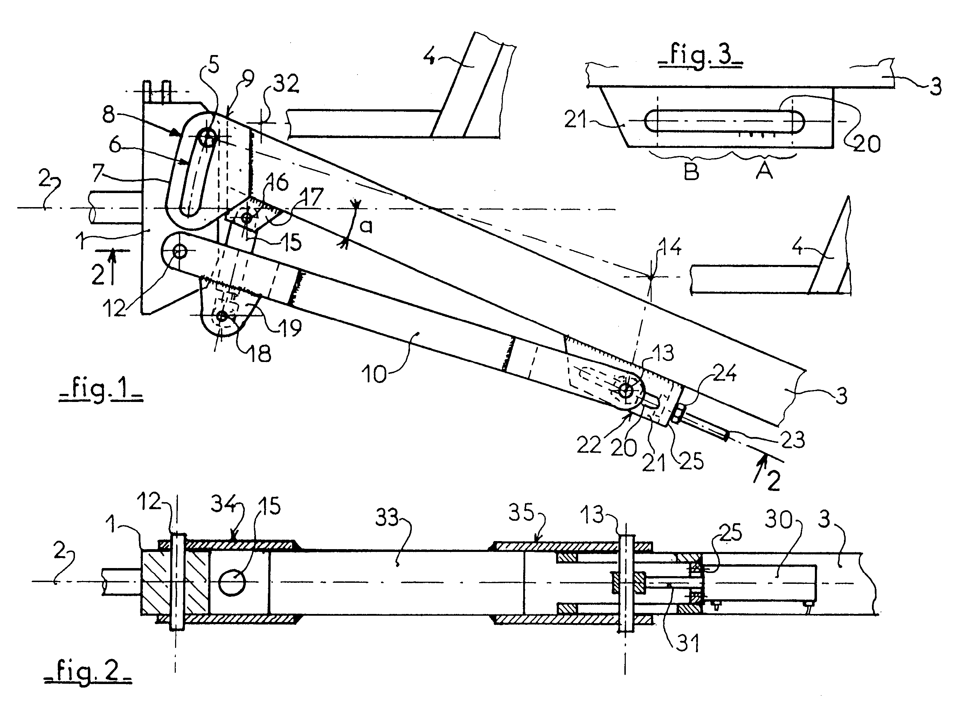

On a représenté, figure 1, une charrue du type réversible. Cette charrue comprend une tête 1 qui pivote, par des moyens appropriés non représentés, autour d'un axe longitudinal 2 qui correspond à l'axe de retournement.

La tête 1 supporte un bâti 3 sur lequel sont montés des corps 4 partiellement représentés. Ce bâti 3 est relié à la tête 1 au moyen d'un système de glissière qui comprend un axe d'articulation ou pivot 5 implanté directement dans ladite tête 1 et une rainure 6 en forme de lumière dont la dimension est adaptée à celle du pivot 5 qui lui sert de moyen de guidage. La rainure 6 est aménagée dans chaque flasque 7 qui constitue une chape 8 disposée à l'extrémité 9 du bâti 3.

La tête 1 supporte également un bras 10 qui s'étend vers le bâti 3. Ce bras 10 est articulé sur la tête 1 au moyen d'un axe 12. Cet axe 12 est disposé d'un côté de la tête, alors que le pivot 5 est disposé de l'autre côté par rapport à l'axe longitudinal 2. Cet axe 12 est parallèle au pivot 5, c'est-à-dire qu'il est vertical lorsque la charrue est en position normale de travail.

A son autre extrémité, le bras 10 comporte un axe 13 qui est solidaire du bâti 3 à travers un dispositif détaillé plus loin, qui permet le réglage de la position dudit axe 13 par rapport audit bâti. Cet axe 13 est éloigné de la tête 1 ; il se situe sur la longueur du bâti, au niveau de l'ancrage du deuxième corps par exemple.

Le pivot 5 et l'axe 12 sont fixes sur la tête 1 ; leur écartement est constant de même que celui des axes 12 et 13 sur le bras 10.

On remarque, sur la figure 1, que la rainure 6 est en forme d'arc de cercle et que cet arc de cercle est centré en un point 14 qui constitue un axe fictif. Le pivot 5 et les axes 12, 13 et l'axe fictif 14 constituent les angles d'un parallélogramme. Ce parallélogramme est déformable sous l'effet d'un vérin 15 du type à vis ou hydraulique, interposé entre le bâti 3 et le bras 10. Ce vérin est disposé à proximité de la tête 1. Il est articulé sur le bâti 3 au moyen d'un axe 16 disposé dans une chape 17 solidaire du bâti 3 et articulé sur un axe 18 pivotant monté dans une chape 19 sur le bras 10.

La variation de longueur du vérin 15 provoque un mouvement du bâti 3, guidé par sa rainure 6 sur le pivot 5 de la tête 1 et par l'axe 13 en bout du bras 10. Ce déplacement du bâti 3 s'effectue parallèlement à lui-même, réalisant un déport, sans modifier le dévers des corps 4 portés par ledit bâti.

Le dévers, ou la variation de l'angle a entre le bâti 3 et l'axe longitudinal 2, s'effectue au moyen du dispositif de réglage de la position de l'axe 13 du bras 10, par rapport au bâti 3.

Ce dispositif de réglage comprend une rainure 20 aménagée dans les flasques 21 qui forment une chape 22 solidaire du bâti 3 ; cette rainure 20 est parallèle au bâti 3 et est située du côté du bras 10. Cette rainure 20 peut être rectiligne ou en forme d'arc de cercle centré sur l'axe 14.

L'axe 13 est mobile par rapport au bâti 3 sous l'effet d'un système comprenant une vis 23 dont le mouvement est réalisé au moyen d'écrous 24 montés tournants de part et d'autre d'une platine 25 qui est perpendiculaire au bâti 3 et fixée à l'extrémité de la chape 22.

Un tel dispositif de réglage convient pour des déplacements qui se limitent par exemple à un simple réglage de dévers.

On a représenté, figure 2, le bras 10 en coupe, avec un autre mode de réalisation du dispositif de réglage de la position de l'axe 13 par rapport au bâti 3. Ce dispositif comprend au lieu du système vis-écrou, un vérin hydraulique 30 qui permet de modifier à volonté l'angle a que fait le bâti avec l'axe longitudinal 2. L'axe 13 est solidaire de l'extrémité de la tige 31 du vérin 30 ; le corps du vérin est solidaire du bâti 3 ; il est notamment fixé sur la platine 25 située à l'extrémité de la chape 22. On peut ainsi opérer des déplacements plus importants de l'axe 13 par rapport au bâti 3 de façon à effectuer selon les besoins une simple correction de dévers, ou un réglage de la largeur de travail des corps lorsque ceux-ci sont articulés par rapport au bâti 3 au moyen d'un axe 32 par exemple, ou encore effectuer un recentrage du bâti 3, c'est-à-dire diminuer fortement l'angle a pour déplacer le centre de gravité de la charrue vers ou sur l'axe longitudinal 2, afin de faciliter son retournement. La combinaison des deux dispositifs de réglage de la position de l'axe 13 par rapport au bâti est également possible.

Une modification de la largeur de travail des corps demande une légère variation du déport, de façon à adapter la largeur de travail du premier corps.

On a représenté, figure 3, la rainure 20 aménagée dans un flasque 21 solidaire du bâti 3. Cette rainure comporte donc une zone A pour les simples corrections de dévers ou le réglage de la largeur des corps et une zone B pour réaliser le recentrage du bâti et faciliter les opérations de retournement notamment.

Sur la figure 2, on remarque que le bras 10 comprend un caisson central 33 prolongé à chacune de ses extrémités par des chapes 34 du côté de la tête 1 et 35 du côté du dispositif de réglage de l'axe 13. On remarque la position du vérin 15 qui passe dans la chape 34, entre la tête 1 et le caisson 33 du bras 10.

Ce bras 10 contribue au soutènement du bâti par rapport à la tête 1, grâce à l'axe d'articulation 12 qui est implanté sur la tête 1.

Les corps 4, comme il a été indiqué précédemment, peuvent être articulés par rapport au bâti 3 autour d'un axe 32 qui est vertical en position normale de travail de la charrue, de façon à réaliser une charrue à largeur de travail variable. Des systèmes complémentaires classiques en forme de bras de levier et tringles peuvent relier les différents corps 4 entre eux. On peut également prévoir une liaison réglable à volonté, interposée entre chaque corps et le bâti 3.

## Revendications

1. Charrue comprenant : - une tête support (1) centrée sur un axe longitudinal (2), - un bâti (3) pour porter les corps de labour (4), relié par son extrémité à ladite tête (1) par des moyens qui réalisent un mouvement à la fois en translation, de façon à déplacer le bâti (3) parallèlement à lui-même, et en rotation autour d'un pivot (5) qui est vertical lorsque la charrue est en position de travail, - un bras support (10) disposé entre la tête (1) et le bâti (3), articulé sur ladite tête au moyen d'un axe (12) situé à l'opposé dudit pivot (5) par rapport audit axe longitudinal, et articulé sur le bâti (3) au moyen d'un axe (13) qui se situe, éloigné de la tête support (1), sur la longueur de ce dernier, lesquels moyens de mouvement en translation du bâti (3) par rapport à la tête (1) étant constitués d'une glissière en forme d'arc de cercle, le centre dudit arc correspondant à l'un des angles d'un parallélogramme dont les autres angles sont constitués par ledit pivot (5) et les deux axes (12, 13) situés sur ledit bras support (10), caractérisé en ce que le pivot (5) est implanté directement sur la tête support (1), lequel pivot (5) coopère aussi directement avec ladite extrémité dudit bâti (3), côté tête.

2. Charrue selon la revendication 1, caractérisée en ce que les moyens en forme d'arc de cercle consistent en une rainure de guidage (6) aménagée à la façon d'une lumière à l'extrémité du bâti (3), laquelle lumière est guidée au moyens du pivot (5) implanté dans la tête (1) pour réaliser en même temps le mouvement en translation et en rotation dudit bâti (3) par rapport audit pivot (5) de la tête.

3. Charrue selon la revendication 1, caractérisée en ce que les moyens de mouvement en translation du bâti (3) par rapport à la tête (1) sont constitués d'un vérin (15) du type à vis ou hydraulique, situé à proximité de ladite tête et interposé entre le bras (10) et le bâti (3).

4. Charrue selon l'une quelconque des revendications 1 à 3, caractérisée en ce qu'elle comporte un dispositif de réglage de la position de l'axe (13) du bras (10), par rapport au bâti (3), permettant de modifier l'angle (a) du bâti (3) par rapport à l'axe longitudinal (2) de la charrue.

5. Charrue selon la revendication 4, caractérisée en ce qu'elle comporte une rainure (20) aménagée sur le bâti (3) servant de guidage à l'axe (13) du bras (10), lequel axe est soumis à des moyens de manoeuvre.

6. Charrue selon la revendication 5, caractérisée en ce qu'elle comporte un organe de manoeuvre de l'axe (13) du bras (10), solidaire du bâti (3) constitué d'un vérin du type à vis ou hydraulique.

7. Charrue selon la revendication 5, caractérisée en ce que la rainure (20) servant au guidage de l'axe (13) du bras (10) est une rainure rectiligne parallèle au bâti (3).

8. Charrue selon la revendication 5, caractérisée en ce que la rainure (20) de guidage de l'axe (13) du bras (10) est une rainure en arc de cercle dont le centre correspond à l'axe fictif (14) de la rainure (6).

9. Charrue selon l'une quelconque des revendications 5 à 8, caractérisée en ce que la course de l'axe (13) dans la rainure (20), est telle qu'elle permet d'effectuer selon les nécessités, une correction de dévers, une variation de la largeur de travail des corps de labour (4), un recentrage du bâti (3) pour l'opération de retournement.

10. Charrue selon l'une quelconque des revendications 1 à 9, caractérisée en ce qu'elle comporte des moyens de réglage de l'angle formé par les corps (4) par rapport au bâti (3).

## Patentansprüche

1. Pflug mit einem Tragkopf (1) der auf einer Längsachse (2) zentriert ist, weiterhin mit einem Rahmen (3) zum Tragen der Werkzeugkörper (4), der an seinem Ende mit dem Kopf mit Hilfe von Mitteln verbunden ist, die sowohl eine Translationsbewegung zum Versetzen des Rahmens parallel zu sich selbst als auch eine Drehung um eine Schwenkachse (5), die sich vertikal erstreckt, wenn der Pflug sich in der Arbeitsstellung befindet, ermöglichen, weiterhin mit einem Stützarm (10), der zwischen dem Kopf (1) und dem Rahmen (3) angeordnet ist und am Kopf mit Hilfe einer Achse (12), die auf die Längsachse bezogen auf der zur Schwenkachse (5) entgegengesetzten Seite angeordnet und am Rahmen (3) mit Hilfe einer Achse (13), die auf diesem in einem Abstand vom Tragkopf (1) angeordnet ist, angelenkt ist, wobei die Mittel für die Translationsbewegung des Rahmens (3) in Bezug auf den Kopf (1) aus einem bogenförmigen Gleitelement bestehen und der Mittelpunkt des Bogens dabei einer der Ecken eines Parallelogramms entspricht, dessen andere Ecken von der Schwenkachse (5) und von den beiden Achsen (12, 13) gebildet werden, die sich am Stützarm (10) befinden,
**dadurch gekennzeichnet,**
daß die Schwenkachse (5) direkt am Tragkopf (1) ausgebildet ist, wobei die Schwenkachse (5) auch direkt mit dem Ende des Rahmens (3) an der Seite des Kopfes zusammenarbeitet.

2. Pflug nach Anspruch 1,
**dadurch gekennzeichnet,**
daß die kreisbogenförmigen Mittel aus einem Führungsschlitz am Ende des Rahmens (3) bestehen, wobei der Führungsschlitz mit Hilfe der Schwenkachse (5) geführt ist, der am Kopf (1) ausgebildet ist, um gleichzeitig die Translationsbewegung und die Rotationsbewegung des Rahmens (3) in Bezug auf die Schwenkachse (5) des Kopfes zu realisieren.

3. Pflug nach Anspruch 1,
**dadurch gekennzeichnet,**
daß die Mittel für die Translationsbewegung des Rahmens (3) in Bezug auf den Kopf (1) aus einer Schraubenspindel oder einem Arbeitszylinder (15) bestehen, die bzw. der dem Kopf benachbart und zwischen dem Arm (10) und dem Rahmen (3) angeordnet ist.

4. Pflug nach einem der Ansprüche 1 - 3,
**dadurch gekennzeichnet,**
daß er eine Einrichtung zum Einstellen der Position der Achse (13) des Arms (10) in Bezug auf den Rahmen (3) aufweist, wodurch derjenige Winkel (a) verändert werden kann, den der Rahmen (3) mit der Längsachse (2) des Pfluges einschließt.

5. Pflug nach Anspruch 4,
**dadurch gekennzeichnet,**
daß er ein Langloch (20) aufweist, das am Rahmen (3) angebracht ist und das zur Führung der Achse (13) des Armes (10) dient, welche Achse betätigbar ist.

6. Pflug nach Anspruch 5,
**dadurch gekennzeichnet,**
daß ein Betätigungsmittel für die Achse (13) des Armes (10) vorgesehen ist, das mit dem Rahmen (3) fest verbunden ist und das aus einer Schraubenspindel oder einem Hydraulikzylinder besteht.

7. Pflug nach Anspruch 5,
**dadurch gekennzeichnet,**
daß das Langloch (20), das zur Führung der Achse (13) des Armes (10) dient, gerade und parallel zum Rahmen (3) ausgebildet ist.

8. Pflug nach Anspruch 5,
**dadurch gekennzeichnet,**
daß der Schlitz bzw. das Langloch (20) zur Führung der Achse (13) des Armes (10) kreisbogenförmig ausgebildet ist, wobei die Mitte des Kreisbogens der fiktiven Achse (14) des Führungsschlitzes (6) entspricht.

9. Pflug nach einem der Patentansprüche 5 - 8,
**dadurch gekennzeichnet,**
daß der Verlauf der Achse (13) im Langloch (20) derart ist, daß, je nach den Anforderungen, eine Korrektur der Schiefheit, eine Anderung der Arbeitsbreite der Werkzeugkörper (4) und ein Wiederzentrieren des Rahmens (3) beim Umkehren möglich ist.

10. Pflug nach einem der Patentansprüche 1 - 9,
**dadurch gekennzeichnet,**
daß er Mittel zum Einstellen des Winkels aufweist, den die Körper (4) mit dem Rahmen (3) einschließen.

## Claims

1. A plough comprising :
- a supporting head (1) centered about a longitudinal axis (2),
- a frame (3) for carrying the plough bottom (4) connected through its end to said head (1) by means used to produce both a translation movement whereby to cause said frame (3) self-parallel displacement and a rotatory movement about a pin (5) standing upright when the plough is operative,
- a supporting arm (10) located between the head (1) and frame (3), hinged upon said head by means of an axis (12) facing said pin (5) with respect to said longitudinal axis and hinged upon the frame (3) by means of an axis (13), which arm, as distant from the supporting head (1), is provided onto the length of said axis (13), which means used to move the frame translationally to the head (1) are comprised of an arc-shaped slide bar, the center of said arc corresponding to one angle of a parallelogram the remaining angles whereof being comprised of said pin (5) and said two axis (12, 13) formed onto said supporting arm (10), characterized in that the pin (5) is set directly into the supporting head (1), which pin (5) also cooperates directly with said end of said frame (3), at head side thereof.

2. A plough according to claim 1, characterized in that the arc-shaped means are comprised of a guiding groove (6) provided within the end of the frame (3) in the form of a hole to be guided by means of the pin (5) as set into the head (1) whereby achieving at the same time both translational and rotatory motion of said frame (3) with respect to said pin (5) of the head.

3. A plough according to claim 1, characterized in that the means used to produce the frame (3) translational movement with respect to the head (1) are comprised of one cylinder (15) of either screw or hydraulic type, as provided in the vicinity of said head and interposed between the arm (10) and frame (3).

4. A plough according to any claims 1 to 3,characterized in that it comprises an adjusting device for adjustinq the position of the axis (13) of arm (10) with respect to the frame(3), allowing to vary the angle (a) between the frame (3) and the longitudinal axis (2) of the plough.

5. A plough according to claim 4, characterized in that it includes a groove (20) formed onto the frame (3) to ensure guidance of the axis (13) of arm (10), which axis is actuated by actuation means.

6. A plough according to claim 5, characterized in that it includes an actuation unit for actuating the axis (13) of arm (10) integral with frame (3) that is comprised of a cylinder of either screw or hydraulic type.

7. A plough according to claim 5, characterized in that the groove (20) to ensure guidance of the axis (13) of arm (10) is a straight groove formed parallely to the frame (3).

8. A plough according to claim 5, characterized in that the groove (20) to ensure guidance of the axis (13) of arm (10) is an arc-shaped groove,the center whereof corresponding to the imaginary axis (14) of groove (6).

9. A plough according to any claims 5 to 8, characterized in that the stroke of the axis (13) within the groove (20) is such as to enable off-setting, functional width adjustment of plough bodies (4), recentering of frame (3) to be made according to need, whereby ploughing up is allowed.

10. A plough according to any claims 1 to 9, characterized in that it includes adjusting means for adjustment of the body angle (4) as formed with respect to the frame (3).
